Europäisches Patentamt

European Patent Office

Office européen des brevets

(19)

(11) Veröffentlichungsnummer: **0 260 723 B1**

# (12) EUROPÄISCHE PATENTSCHRIFT

(45) Veröffentlichungstag der Patentschrift: **17.07.91**

(21) Anmeldenummer: **87115078.5**

(22) Anmeldetag: **01.04.86**

(51) Int. Cl.5: **F02B 39/12, F02B 33/44**

(60) Veröffentlichungsnummer der früheren Anmeldung nach Art. 76 EPÜ: **0 198 312**

(54) **Antriebsvorrichtung, insbesondere für Kraftfahrzeuge.**

(30) Priorität: **03.04.85 DE 3512281**

(43) Veröffentlichungstag der Anmeldung:
**23.03.88 Patentblatt 88/12**

(45) Bekanntmachung des Hinweises auf die
Patenterteilung:
**17.07.91 Patentblatt 91/29**

(84) Benannte Vertragsstaaten:
**AT BE CH DE FR GB IT LI LU NL SE**

(56) Entgegenhaltungen:
**DE-C- 855 640        FR-A- 956 481**
**FR-A- 1 087 387      US-A- 2 818 847**
**US-A- 2 828 907      US-A- 3 279 447**

**PATENT ABSTRACTS OF JAPAN, Band 7, Nr.
283 (M-263)[1428], 16. Dezember 1983; & JP-
A-58 158 320 (DAIHATSU KOGYO K.K.)
20-09-1983**

(73) Patentinhaber: **Regar, Karl-Nikolaus, Dr.
Rebhuhnweg 3
W-8000 München 60(DE)**

(72) Erfinder: **Regar, Karl-Nikolaus, Dr.
Rebhuhnweg 3
W-8000 München 60(DE)**

(74) Vertreter: **Sandmann, Joachim, Dr.
Hirtenstrasse 19
W-8012 Ottobrunn(DE)**

**Beschreibung**

Die Erfindung betrifft eine Antriebsvorrichtung, insbesondere für Kraftfahrzeuge, mit einem Verbrennungsmotor mit einem von der Motorwelle über einen Drehzahlvariator mit drehzahlabhängig gesteuertem Übersetzungsverhältnis antreibbaren, Luftverdichtendem Ladegerät der Kreiselbauart.

Eine derartige Antriebsvorrichtung ist bereits bekannt (US-A-2 828 907). Der Drehzahlvariator verhindert, daß mit steigen-der Motordrehzahl auch die Drehzahl des Laderantriebs entsprechend ansteigt, was zu einer Überladung und zu einer unnötigen Leistungsaufnahme des Ladegeräts führen würde. Das von der Motorwelle angetriebene Ladegerät beansprucht zwar einen Teil der Motorleistung, dafür wird jedoch anders als bei den bekannten Abgasturboladern die Ladung im wesentlichen ohne Ansprechverzögerung zur Wirkung gebracht. Außerdem lassen sich mit einem motorgetriebenen Ladegerät bei richtiger Wahl der Vorrichtungskomponenten sowie geschickter Einsatz- und Regelstrategie im Vergleich zum Abgasturbomotor und zum Saugmotor gleicher Leistung erhebliche Kraftstoffeinsparungen erzielen. Einem sparsamen Betrieb kommt auch die Verwendung eines Kreiselverdichters als Ladegerät entgegen. Ein solcher Strömungslader hat im Gegensatz zu einem Ladegerät der Verdrängerbauart (Flügelzellenlader, Rootslader) eine geringere Leistungsaufnahme, was auch einer geringeren Erwärmung der Luft durch Reibungswärme entspricht.

Im übrigen ist der durch das Laden erzielbare Vorteil bekannt. Das von einem Verbrennungsmotor wie beispielsweise einem Ottomotor erzeugte Drehmoment weist bei einer bestimmten Motordrehzahl ein Maximum auf und fällt mit steigender wie mit sinkender Drehzahl ab. Insbesondere bei Kraftfahrzeugen wirkt sich das in niedrigen Drehzahlbereichen verminderte Drehmoment nachteilig aus, da die Beschleunigung zu wünschen übrig läßt. Hier setzt das Laden des Verbrennungsmotors ein, wodurch dessen Drehmomentgröße und insbesondere auch der Drehmomentverlauf über der Motordrehzahl beeinflußt werden. Durch den Ladedruck werden die Brennkammern mit einer gegenüber dem Ansaugbetrieb erhöhten Füllmenge beschickt, was ohne Hubraumvergrößerung zu einer erhöhten Leistung führt.

Bei der bekannten Antriebsvorrichtung ist es jedoch von Nachteil, daß das Ladegerät ständig vom Motor angetrieben wird und die Ladeluft einfach abgeblasen wird, soweit kein Ladebetrieb sondern Saugbetrieb vorgesehen ist. Während des Saugbetriebs beansprucht der im Leerlauf angetriebene Kreiselverdichter einen Teil der Motorleistung.

Es ist allerdings bekannt, diesen Nachteil dadurch zu vermeiden, daß zwischen dem Ladegerät und der Motorwelle eine Trennkupplung zum Zu- und Abschalten des Ladegeräts angeordnet ist (DE-A-3 104 124), wofür auch ein handbedientes Schaltglied bekannt ist (DE-C-855 640). Hier ist als motorgetriebenes Ladegerät allerdings jeweils ein Verdrängerlader vorgesehen.

Ein weiterer Nachteil der bekannten Vorrichtungen liegt darin, daß die Ladung ausschließlich in einer Endstufe erfolgt und innerhalb des Ladebetriebs keine Leistungssteuerung erfolgt. Hier wird also bis zur Vollast im Saugbetrieb gefahren und dann beispielsweise mittels einer "kick-down"-Zuschaltung über das Gaspedal wie gemäß FR-A-1 087 387 ein Ladedrehmoment zur Verfügung gestellt, das weder dosiert noch differenziert nach der jeweiligen Motordrehzahl aufgebracht werden kann. Dieses volle Zuschalten einer zusätzlichen ladebedingten Motorleistung ist nicht ganz unproblematisch. Insbesondere wirkt sich die fehlende Dosierbarkeit dahingehend aus, daß ein Kraftfahrzeug, das beispielsweise unter Vollastbedingungen im Ansaugbetrieb 180 km/h fährt, durch das zusätzlich aufgebrachte Ladedrehmoment bis auf eine Geschwindigkeit von beispielsweise 220 km/h beschleunigt wird, da erst in diesem Punkt das zusätzliche Drehmoment durch den geschwindigkeitsbedingten zusätzlichen Fahrtwiderstand aufgezehrt wird. Ein Fahren mit einer Dauergeschwindigkeit von beispielsweise 200 km/h ist also nicht möglich.

Es gibt aber besondere Situationen, in denen der selbsttätige Übergang in den unbeeinflußbaren Ladebetrieb weniger sinnvoll ist. Bei schwierigen Straßenverhältnissen und insbesondere bei Glatteis oder Schneeglätte sollte möglichst verhindert werden, daß eine zu große Zugkraft am Radumfang wirksam wird. Andererseits gibt es auch Verhältnisse, unter denen es zweckmäßig erscheint, das durch den Ladevorgang erzielte zusätzliche Drehmoment im wesentlichen über den gesamten Drehzahlbereich des Motors zur Verfügung zu stellen. Solche Verhältnisse liegen beispielsweise bei Paßfahrten vor, bei denen eine perfekte Dosierung des Drehmoments im gesamten Drehmomentbereich erforderlich wird.

Dementsprechend liegt der Erfindung die Aufgabe zugrunde, die Antriebsvorrichtung dahingehend zu verbessern, daß ihre Betriebsweise den jeweiligen Gegebenheiten angepaßt werden kann und sich Kraftstoffeinsparungen erzielen lassen.

Diese Aufgabe wird erfindungsgemäß gelöst durch eine zwischen dem Ladegerät und der Motorwelle angeordnete Trennkupplung zum Zu- und Abschalten des Ladegerätes und eine vom Steuerglied des Verbrennungsmotors verschiedene Schalteinrichtung zur Wahl des Betriebszustandes der Trennkupplung mit einem Stellglied, das zwischen einer Stellung, in der die Trennkupplung das Ladegerät in Abhängigkeit von der Stellung des Steuergliedes an die Motorwelle ankuppelt oder davon abkuppelt, so daß der Verbrennungmotor zwischen Saug- und Ladebetrieb wechseln kann, einer Abschaltstellung, in der die Trennkupplung das Ladegerät von der Motorwelle abkuppelt, so daß das Ladegerät ständig abgeschaltet ist, und einer Dauerladestellung verstellbar ist, in der die Trennkupplung das Ladegerät an die Motorwelle ankuppelt, so daß das Ladegerät ständig angetrieben ist.

Für diese erfindungsgemäße Ausbildung kommt zu den Vorteilen, die sich bereits aus der Verwendung eines vom Motor über einen Drehzahlvariator angetriebenen Kreiselladers ergeben, die Verbesserung hinzu, daß infolge der vorgesehenen Trennkupplung im normalerweise gefahrenen Mischbetrieb das Ladegerät nur während der Ladebetriebsphasen und nicht während der Saugbetriebsphasen angetrieben wird, was zu weiteren Kraftstoffeinsparungen führt. Im übrigen besteht jedoch infolge der vorgesehenen Schalteinrichtung mit einem vergleichsweise geringen Aufwand die Möglichkeit, wahlweise auf reinen Saugbetrieb oder auf Dauerladebetrieb überzugehen, bei denen jeweils keine Umschaltung in die andere Betriebsart in Abhängigkeit von der Stellung des Gaspedals bzw. der Drosselklappe erfolgt. Somit ermöglicht die Schalteinrichtung eine optimale Anpassung an die jeweiligen Gegebenheiten, also insbesondere eine Berücksichtigung der Umgebungsbedingungen, also der Straßenverhältnisse bei einem mit der Antriebsvorrichtung ausgerüsteten Kraftfahrzeug.

Von besonderer Bedeutung ist dabei, daß bei gewählter Dauerladestellung das Ladedrehmoment über das Gaspedal bzw. die Stellung der Drosselklappe stufenlos geändert wird, so daß störende Leistungssprünge vermieden werden. Zwar ist eine Leistungssteuerung im Ladebetrieb über das Gaspedal bereits bekannt (EP-A-O 074 905), dort erfolgt die Steuerung jedoch über eine von der Drosselklappe für den Saugbetrieb verschiedene Ladedrossel, die nach vollständigem Öffnen der Saugbetriebsdrossel durch weiteres Niedertreten des Gaspedals entgegen einer Federkraft betätigt wird, um durch zunehmende Drosselung eines Umwälzquerschnitts für die Ladeströmung eines Verdrängerladers zunehmend Ladedruck zu erzeugen. Es wird also mit einer mehr oder minder starken Ladeumwälzströmung gearbeitet, was einer auf sparsamen Kraftstoffverbrauch ausgerichteten Betriebsweise abträglich ist.

Bei einer zweckmäßigen Ausführungsform der Erfindung ist dem Ladegerät eine Umgehungsleitung mit einer Absperreinrichtung zugeordnet, die vom Verteilerdruck hinter der Drosselklappe derart beaufschlagt ist, daß sich die Absperreinrichtung durch Verteilerunterdruck öffnet und eine Umwälzung durch das Ladegerät und die Umgehungsleitung mit einer Ladedruckentlastung bewirkt. Diese Ausbildung berücksichtigt, daß beim Dauerladebetrieb auch bei geschlossener Drosselklappe, also beispielsweise im Leerlauf und insbesondere im Schubbetrieb mit höherer Motordrehzahl, das Ladegerät voll gegen die geschlossene Drosselklappe fördern und einer Pumpe vergleichbar einen entsprechenden Druck aufbauen würde. Dieser Betriebszustand könnte auf Dauer zu einer Beschädigung des Ladegeräts führen, so insbesondere bei längeren Abfahrten im ersten oder zweiten Gang im Schubbetrieb. Durch die vom Verteilerunterdruck gesteuerte Öffnung der Umgehungsleitung und die damit verbundene Ladedruckentlastung wird dieser Schwierigkeit wirksam begegnet. Die Umgehungsleitung ist natürlich auch im Saugbetrieb bei abgeschaltetem Ladegerät von Vorteil, weil die Ansaugströmung nicht durch das Ladegerät verläuft und dementsprechend ein vom Ladegerät bedingter ungünstiger Druckabfall in der Ansaugströmung vermieden wird.

Die Vorteile der Erfindung lassen sich bei allen Verbrennungsmotoren nutzen, die für einen Ansaugbetrieb und einen Ladebetrieb in Betracht kommen. Dabei kann es sich sowohl um einen Einspritzmotor wie um einen Vergasermotor handeln.

Ein Ausführungsbeispiel der Erfindung wird nachfolgend anhand einer schematischen Zeichnung näher erläutert. Diese zeigt bei einem Einspritzmotor mit einem Ladegerät eine Schalteinrichtung für den wahlweisen Mischbetrieb, den reinen Saugbetrieb und den Dauerladebetrieb.

Wie dargestellt ist ein Einspritzmotor 1 mit vier Zylindern vorgesehen, von dem die Antriebswelle 2 für den Radantrieb ausgeht. Den Zylindern des Motors 1 ist in bekannter Weise ein Gemischverteiler 3 und ein Abgassammler 4 zugeordnet, an den die Abgasleitung 5 angeschlossen ist.

In den Gemischverteiler 3 mündet die Ansaugleitung 6, in die ein Ladegerät 7 der Kreiselbauart und in Strömungsrichtung dahinter eine Drossel mit einer Klappe 30 eingebaut ist.

An den Eingang des Ladegeräts 7 bzw. Kreiselverdichters ist eine Leitung 11 mit einer zentralen Einspritzdüse 37, einem Luftmengenmesser 38 und einem Luftfilter 14 angeschlossen.

Das Ladegerät 7 wird über eine Motorwelle 17 angetrieben, die mit einem Drehzahlvariator 18 verbunden ist. Dieser ist in Form eines Umschlingungsgetriebes ausgebildet, bei dem der wirksame Durchmesser der treibenden und der angetriebenen Riemenscheibe gegensinnig und drehzahlabhängig beispielsweise durch Fliehkraftregelung verstellt werden kann. Der Drehzahlvariator 18 ist abgangseitig über eine elektromagnetisch betätigbare Trennkupplung 19 mit einem Übersetzungsgetriebe 20 verbunden, das den Läufer des Ladegeräts 7 mit einer gegenüber der Drehzahl der Motorwelle 17 erhöhten Drehzahl antreibt.

Dem Motor 1 ist in bekannter Weise ein Steuerglied in Form eines Gaspedals 21 zugeordnet. Wie dargestellt ist in der Abgasleitung 5 eine Lambdasonde 23 angeordnet.

Wie angedeutet wirkt das Gaspedal 21 mechanisch auf die Drosselklappe 30, die bei nahezu vollständiger Öffnung den Endschalter 33 schließt. Eine Schalteinrichtung 40 mit einem Stellglied 41 ist an eine Batterie 42, an den Endschalter 33 sowie über eine gemeinsame Leitung an die Trennkupplung 19 und an die zentrale Einspritzdüse 37 angeschlossen. Mit dieser gemeinsamen Leitung steht auch der Endschalter 33 in Verbindung.

Wie dargestellt gibt es drei Schaltstellungen für das Stellglied 41, das in der dargestellten Stellung P (Power)die Batterie ständig mit der Trennkupplung 19 verbindet, so daß das Ladegerät unabhängig von der Stellung des Gaspedals 21 stets zugeschaltet ist.

In der Stellung E (Economy) des Stellglieds 41 ist die direkte Verbindung von Batterie 42 und Trennkupplung unterbunden und kann nur über den Endschalter 33 erfolgen. Dieses ist die Stellung für den Mischbetrieb, bei dem das Ladegerät 7 in Abhängigkeit von der Stellung des Gaspedals 21 zugeschaltet bzw. wieder abgeschaltet wird.

In der Stellung O des Stellglieds 41 sind die drei Anschlußkontakte der Schalteinrichtung 40 voneinander getrennt, so daß die Trennkupplung 19 die Antriebsverbindung z wischen Motorwelle 17 und Ladegerät 7 unterbricht, so daß der Motor 1 nur im Saugbetrieb arbeitet.

Dem Ladegerät 7 ist eine Umgehungsleitung 43 zugeordnet, welche die Leitung 11 und die Ansaugleitung 6 verbindet. In die Umgehungsleitung 43 ist eine Absperreinrichtung 29 mit einer Feder 31 eingebaut, die über ein Druckfühlrohr 32 mit dem Gemischverteiler 3 verbunden ist.

Im Ladebetrieb fördert das Ladegerät 7 Druckluft über die Leitung 6 und die geöffnete Drosselklappe 30 zum Gemischverteiler 3. Dann bewirkt der im Gemischverteiler 3 entstehende Überdruck über das Druckfühlrohr 32 die Schließung der Absperreinrichtung 29, so daß der Ladevorgang nicht durch die Umgehungsleitung 43 beeinträchtigt wird.

Wird dann bei Stellung E des Stellglieds 41 das Gaspedal 21 zurückgenommen, öffnet sich der Endschalter 33 und wird die Stromzufuhr zur Trennkupplung 19 unterbrochen, was zum Abschalten des Ladegeräts führt. Im Gemischverteiler 3 entsteht Unterdruck, und die Absperreinrichtung 29 wird entgegen der Wirkung der Feder 31 geöffnet. Der Motor 1 saugt somit Luft sowohl über die Umgehungsleitung 43 wie durch das Ladegerät 7 hindurch an.

Bei Ladebetrieb und bei im wesentlichen geschlossener Drosselklappe 30 - ein Betriebszustand, der bei Stellung P des Stellglieds vorkommen kann - öffnet sich die Absperreinrichtung 29 unter der Wirkung des Unterdrucks im Gemischverteiler 3, der über das Druckfühlrohr 32 einwirkt. Dann wird das Ladegerät 7 entlastet, wobei eine Umwälzströmung durch das Ladegerät 7 und die Umgehungsleitung 43 stattfindet.

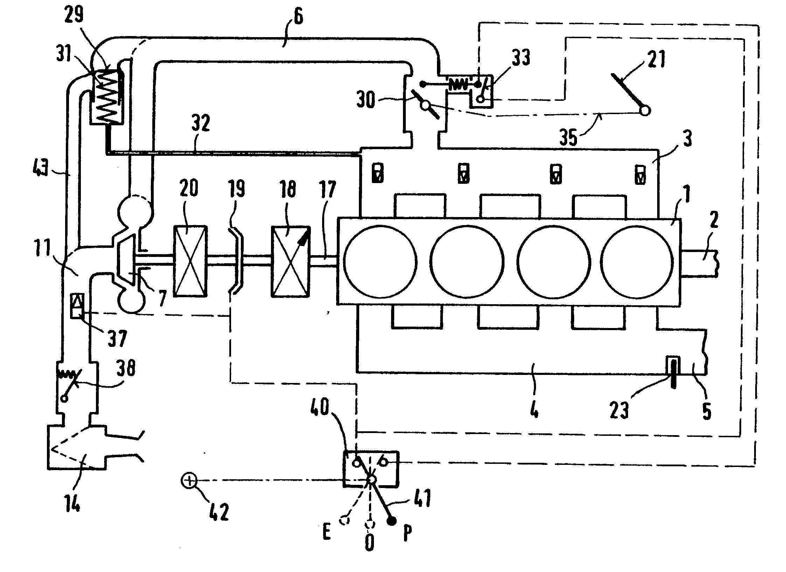

## Patentansprüche

1. Antriebsvorrichtung, insbesondere für Kraftfahrzeuge, mit einem Verbrennungsmotor (1) mit einem von der Motorwelle (17) des Verbrennungsmotors über einen Drehzahlvariator (18) mit drehzahlabhängig gesteuertem Übersetzungsverhältnis antreibbaren, luftverdichtendem Ladegerät (7) der Kreiselbauart, **gekennzeichnet** durch
   - eine zwischen dem Ladegerät (7) und der Motorwelle (17) angeordnete Trennkupplung (19) zum Zu- und Abschalten des Ladegeräts (7) und
   - eine vom Steuerglied (21) des Verbrennungsmotors (1) verschiedene Schalteinrichtung (40) zur Wahl des Betriebszustandes der Trennkupplung (19) mit einem Stellglied (41), das zwischen
     - einer Stellung (E), in der die Trennkupplung (19) das Ladegerät (7) in Abhängigkeit von der Stellung des Steuergliedes (21) an die Motorwelle (17) ankuppelt oder davon abkuppelt, so daß der Verbrennungsmotor zwischen Saug- und Ladebetrieb wechseln kann,
     - einer Abschaltstellung (0), in der die Trennkupplung (19) das Ladegerät (7) von der Motorwelle (17) abkuppelt, so daß das Ladegerät (7) ständig abgeschaltet ist, und
     - einer Dauerladestellung (p) verstellbar ist, in der die Trennkupplung (19) das Ladegerät (7) an die Motorwelle (17) ankuppelt, so daß das Ladegerät ständig angetrieben ist.

2. Antriebsvorrichtung nach Anspruch 1, dadurch **gekennzeichnet,** daß dem Ladegerät (7) eine Umgehungsleitung (43) mit einer Absperreinrichtung (29) zugeordnet ist, die vom Verteilerdruck hinter der Drosselklappe (30) derart beaufschlagt ist, daß sich die Absperreinrichtung (29) durch Verteilerunterdruck öffnet und eine Umwälzung durch das Ladegerät (7) und die Umgehungsleitung (43) mit einer Ladedruckentlastung bewirkt.

## Claims

1. A drive unit, especially for motorized vehicles, comprising an internal combustion engine (1) having an air compressing supercharger (7) of the centrifugal flow type, said supercharger being capable of being driven by the engine shaft (17) of the internal combustion engine through a rotational speed variator in a transmission ratio controllable in dependence of the speed of rotation, **characterized** by

- a disconnect-type clutch (19) disposed between the supercharger (7) and the engine shaft (17) for cutting in and cutting off the supercharger (7), and by
- a control device (40) different from the control member (21) of the internal combustion engine (1), said control device being intended to select the operational mode of the disconnect-type clutch (19) by means of a selector element (41) which is movable between
  - a position (E) in which the disconnect-type clutch (19) connects or disconnects the supercharger (7) with or from the engine shaft (17) in response to the position of the control member (21), such that the internal combustion engine may change between the induction and boosting modes,
  - a cut-off position (0) in which the disconnect-type clutch (19) disconnects the supercharger (7) from the engine shaft (17), such that the supercharger (7) is constantly off, and
  - a permanent boost position (P) in which the disconnect-type clutch (19) connects the supercharger (7) with the engine shaft (17), such that the supercharger is permanently driven.

2. The drive unit according to claim 1, **characterized** in that a by-pass line (43) having a shut-off device (29) is associated with the supercharger (7), the distribution pressure prevailing downstream of the throttle valve (30) being admitted to said by-pass line in such a manner that the shut-off device (29) opens in response to negative distribution pressure and causes circulation through the supercharger (7) and the by-pass line (43) while relieving the boosting pressure.

## Revendications

1. Dispositif d'entraînement, spécialement pour des véhicules à moteur, comprenant un moteur à combustion (1) ayant un suralimenteur (7) du type centrifuge, à compression d'air, capable d'être entraîné par l'arbre de moteur (17) du moteur à combustion par l'intermédiaire d'un variateur de vitesse de rotation (18) à un rapport de transmission réglable en fonction de la vitesse de rotation, **caractérisé** par

- un embrayage de séparation (19), disposé entre le suralimenteur (7) et l'arbre de moteur (17), et destiné à mettre en service et hors service le suralimenteur (7), et
- un dispositif de commande (40) différent de l'organe de commande (21) du moteur à combustion (1), destiné à sélectionner le régime d'opération de l'embrayage de séparation (19) par l'intermédiaire d'un organe de sélection (41), le dernier organe étant capable d'être déplacé entre
  - une position (E), dans laquelle l'embrayage de séparation (19) connecte ou déconnecte le suralimenteur (7) avec ou de l'arbre de moteur (17) en fonction de la position de l'organe de commande (21), de manière que le moteur à combustion peut changer entre les régimes d'aspiration et de suralimentation,
  - une position d'arrêt (0) dans laquelle l'embrayage de séparation (19) déconnecte le suralimenteur (7) de l'arbre de moteur (17), de manière que le suralimenteur (7) est constamment à l'arrêt, et
  - une position de suralimentation permanente (P) dans laquelle l'embrayage de séparation (19) connecte le suralimenteur (7) à l'arbre de moteur (17), de manière que le suralimenteur est constamment entraîné.

2. Dispositif d'entraînement selon la revendication 1, **caractérisé** en ce qu'une conduite de dérivation (43) avec un dispositif d'arrêt (29) est associée au suralimenteur (7), la pression de distribution existant en aval de la soupape d'étranglement (30) étant admise à la conduite de dérivation de telle façon que le dispositif d'arrêt (29) s'ouvre sous une pression de distribution négative et provoque une circulation à travers le suralimenteur (7) et la conduite de dérivation (43) avec une réduction de la pression de suralimentation.